# EUROPEAN PATENT APPLICATION

(11) **EP 4 760 924 A1**
(43) Date of publication of application: **17.06.2026**
(21) Application number: 25207582.5
(22) Date of filing: 08.10.2025
(51) Int. Cl.: H01M 50/244, H01M 50/258, H01M 50/251, H01M 50/269

(54) **BATTERY RACK AND ENERGY STORAGE SYSTEM INCLUDING THE SAME**

(30) Priority: 13.12.2024 KR 20240186377
(71) Applicant: SAMSUNG SDI CO., LTD., Yongin-si, Gyeonggi-do 17084 (KR)
(72) Inventor: CHUN, Myungchul, 17084 Yongin-si (KR); SEOK, Shangchul, 17084 Yongin-si (KR)
(74) Representative: Marks & Clerk LLP

(57) **Abstract**

Provided are a battery rack and an energy storage system including the battery rack. The battery rack includes a frame unit having an accommodation portion configured to accommodate a battery module. The frame unit includes a rail groove unit on one side of the frame unit that extends in a longitudinal direction and has a shape of a groove, and a moving protrusion protruding outward from on another side of the frame unit opposite to the one side on which the rail groove unit is located.

## Description

### BACKGROUND

### 1. Field

The present disclosure relates to a battery rack and an energy storage system including the same.

### 2. Description of the Related Art

In general, an energy storage system (ESS) is connected to a renewable energy such as a solar cell, and a power system. The ESS is configured to store power when power demand of a load is low and to use stored power when power demand of a load is high. The ESS may include a large quantity of secondary batteries used in an electronic device such as a mobile phone or a notebook.

An energy storage system includes a battery rack that may accommodate a battery module, and the battery rack may accommodate a battery module including one or more battery cells.

The above-described information is only for enhancement of understanding of the background of the present disclosure, and thus may contain information that does not constitute the related art.

### SUMMARY

Embodiments provide a battery rack in which a rail groove unit and a moving protrusion are provided in a frame unit that accommodates battery modules, allowing a plurality of frame units to be easily coupled together in a stacking manner, and an energy storage system including the battery rack.

Technical objectives of the present disclosure are not limited to the foregoing, and other unmentioned objectives or advantages of the present disclosure would be understood from the following description and be more clearly understood from the embodiments of the present disclosure. In addition, it would be appreciated that the objectives and advantages of the present disclosure may be implemented by means provided in the claims and a combination thereof.

According to an embodiment of the present disclosure, a battery rack includes a frame unit having an accommodation portion (configured) to accommodate a battery module. The frame unit has a rail groove unit on one side thereof that extends in a longitudinal direction and has a shape of a groove, and a moving protrusion protruding outward on (or from) another side (of the frame unit) opposite to the (one) side on which the rail groove unit is located.

In an embodiment, the frame unit may include two or more (or a plurality of) frame units, and the frame units may be stacked and coupled (or stackable and couplable) to each other in a preset direction.

In an embodiment, the frame units (or plurality of frame units) may be coupled (or fastenable or couplable) to each other while moving relative to each other in a preset direction. The preset direction may be the longitudinal direction.

In an embodiment, opposite sides of the rail groove unit in the longitudinal direction may be open.

In an embodiment, a through-hole portion may be (formed) on one side of the rail groove unit to allow the moving protrusion to pass therethrough, and the through-hole may extend in a longitudinal direction of the rail groove unit and penetrate the rail groove unit.

In an embodiment, one surface of the moving protrusion (that faces outside may be (formed) (substantially) flat.

In an embodiment, the battery rack may further include a guide unit fixed in position to the frame unit and configured to seat the battery module thereon.

In an embodiment, the guide unit may extend in the longitudinal direction of the frame unit and may provide an insertion path for the battery module.

In an embodiment, the guide unit may include two or more guide units (that are respectively) arranged on opposite sides of the battery module.

In an embodiment, the battery rack may further include a fixing unit that is configured to connect the battery module to the frame unit and to fix a position of the battery module (or the fixing unit connects the battery module to the frame unit and fixes a position of the battery module).

In an embodiment, the fixing unit may include a fixing body coupled to the battery module, and a fastening member configured to penetrate the fixing body and to be coupled to the frame unit.

In an embodiment, the fixing unit may include two or more (or a plurality of) fixing units (that are respectively) arranged on opposite sides of the battery module with respect to a central portion of the battery module.

According to an embodiment of the present disclosure, an energy storage system includes a battery module including one or more battery cells, and a battery rack including a frame unit having an accommodation portion to accommodate the battery module. The frame unit has a rail groove unit on one side thereof that extends in a longitudinal direction and has a shape of a groove, and a moving protrusion protruding outward on (or from) another side (of the frame unit) opposite to the (one) side on which the rail groove unit is located.

In an embodiment, the frame unit may include two or more (or a plurality of) frame units, and the frame units may be stacked and coupled (or stackable and couplable) to each other in a preset direction.

In an embodiment, the frame units may be coupled (or fastenable or coupleable) to each other while moving relative to each other in a preset direction. The preset direction may be the longitudinal direction.

In an embodiment, opposite sides of the rail groove unit in the longitudinal direction may be open.

In an embodiment, a through-hole portion may be (formed) on one side of the rail groove unit to allow the moving protrusion to pass therethrough, and the through-hole may extend in a longitudinal direction of the rail groove unit and penetrate the rail groove unit.

In an embodiment, one surface of the moving protrusion may be substantially flat.

In an embodiment, the battery rack may further include a guide unit fixed in position to the frame unit and configured to seat the battery module thereon.

In an embodiment, the guide unit may extend in the longitudinal direction of the frame unit, and the guide unit may be configured to provide an insertion path for the battery module.

In an embodiment, the guide unit may include two or more guide units that are respectively arranged on opposite sides of the battery module.

In an embodiment, the battery rack may further include a fixing unit that is configured to connect the battery module to the frame unit and to fix a position of the battery module (or the fixing unit connects the battery module to the frame unit and fixes a position of the battery module).

In an embodiment, the fixing unit may comprise: a fixing body coupled to the battery module; and a fastening member configured to penetrate the fixing body and to be coupled to the frame unit.

In an embodiment, the fixing unit may comprise a plurality of fixing units arranged on opposite sides of the battery module with respect to a central portion of the battery module.

At least some of the above and other features of the invention are set out in the claims.

### BRIEF DESCRIPTION OF THE DRAWINGS

The accompanying drawings illustrate preferred embodiments of the present disclosure, and together with the description of the present disclosure to be provided below, serve to provide further understanding of the technical features of the present disclosure, and therefore, the present disclosure should not be interpreted as being limited to the drawings in which:
FIG. 1 is a diagram illustrating a battery rack according to an embodiment of the present disclosure;
FIG. 2 is a perspective view illustrating a battery module and a battery rack according to an embodiment of the present disclosure;
FIG. 3 is an enlarged view of portion A of FIG. 1;
FIG. 4 is a diagram illustrating a state in which a plurality of frame units is coupled to each other;
FIG. 5 is a perspective view illustrating a frame unit of a battery rack according to another embodiment of the present disclosure;
FIG. 6 is a diagram illustrating a state in which battery modules are arranged in a frame unit, according to another embodiment of the present disclosure;
FIG. 7 is a rear perspective view illustrating a state in which battery modules are arranged in a frame unit, according to another embodiment of the present disclosure; and
FIG. 8 is a perspective view illustrating a battery rack according to another embodiment of the present disclosure.

### DETAILED DESCRIPTION

Hereinafter, preferable embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, embodiments described herein and components illustrated in the drawings are only the most preferred embodiments of the present disclosure and do not represent all aspects of the technical scope of the present disclosure, and thus, it should be understood that various equivalents and modifications that may replace them may be made at the time of filing of the present disclosure, provided that they fall within the scope of the claims.

In addition, the terms "includes", "comprises" and/or "including", "comprising" used herein specify the presence of stated shapes, numbers, processes, members, components, and/or groups thereof, but do not preclude the presence or addition of one or more other shapes, numbers, operations, members, components, and/or groups thereof.

In addition, in order to help understanding of the present disclosure, the accompanying drawings are not drawn to scale, and the dimensions of some components may be exaggerated. In addition, the same reference numerals may be assigned to the same elements in different embodiments.

When it is described that two objects are 'identical', this means that these objects are 'substantially identical'. Accordingly, the substantially identical objects may include deviations considered low in the art, for example, deviations within 5 %. In addition, when it is described that certain parameters are uniform in a region, this may mean that the parameters are uniform in terms of an average in the corresponding region.

Although the terms 'first', 'second', and the like are used to describe different elements, these elements are not limited by the terms. These terms are used to distinguish one element from another, and unless stated otherwise, a first element may be a second element.

Throughout the specification, unless stated otherwise, each element may be singular or plural.

When an element is referred to as being arranged "above (or under)" or "on (or below)" another element, the element may be arranged on an upper surface (or a lower surface) of the other element, and an intervening element may be arranged between the element and the other element on (or below) the element.

In addition, when an element is referred to as being "connected", "coupled", or "linked" to another element, it should be understood that the element may be directly connected or coupled to the other element, but an intervening element may be "interposed" between the elements, or the elements may be "connected", "coupled", or "linked" to each other through another element. In addition, when a part is referred to as being "electrically coupled" to another part, the part may be directly connected to the other part or may be connected to the other part through an intervening element therebetween.

Throughout the specification, "A and/or B" refers to A, B, or both A and B unless stated otherwise. That is, "and/or" includes all or any combination of the listed items. "C to D" includes values greater than or equal to C but less than or equal to D, unless stated otherwise.

The terminology used herein is for the purpose of describing embodiments of the present disclosure, and is not intended to limit the present disclosure.

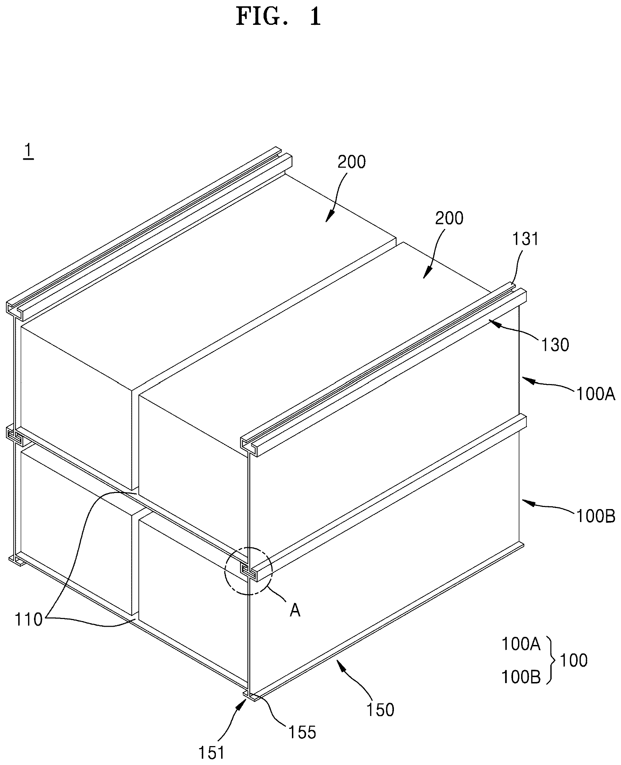

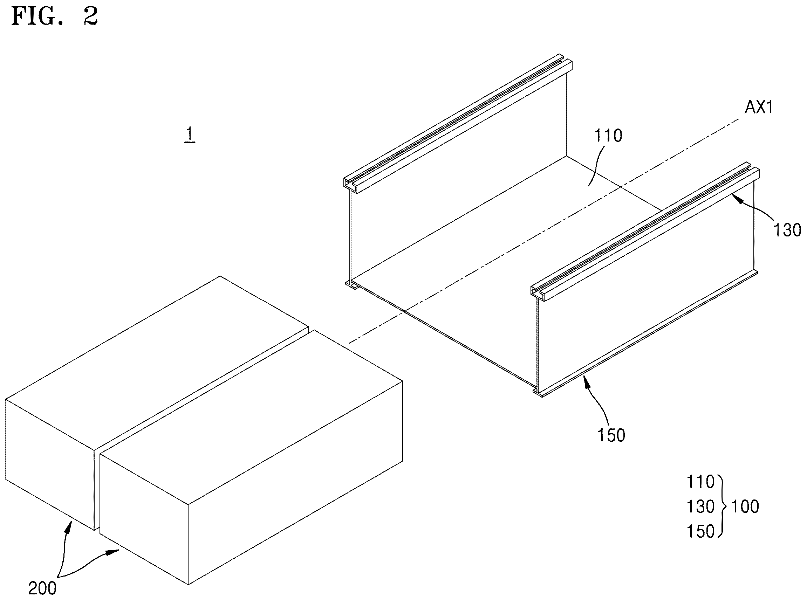

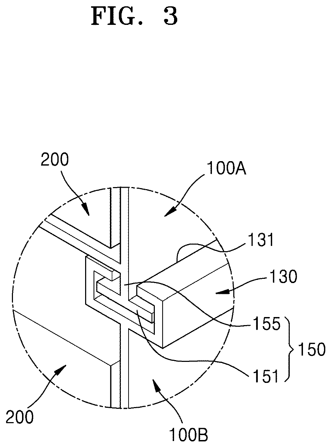

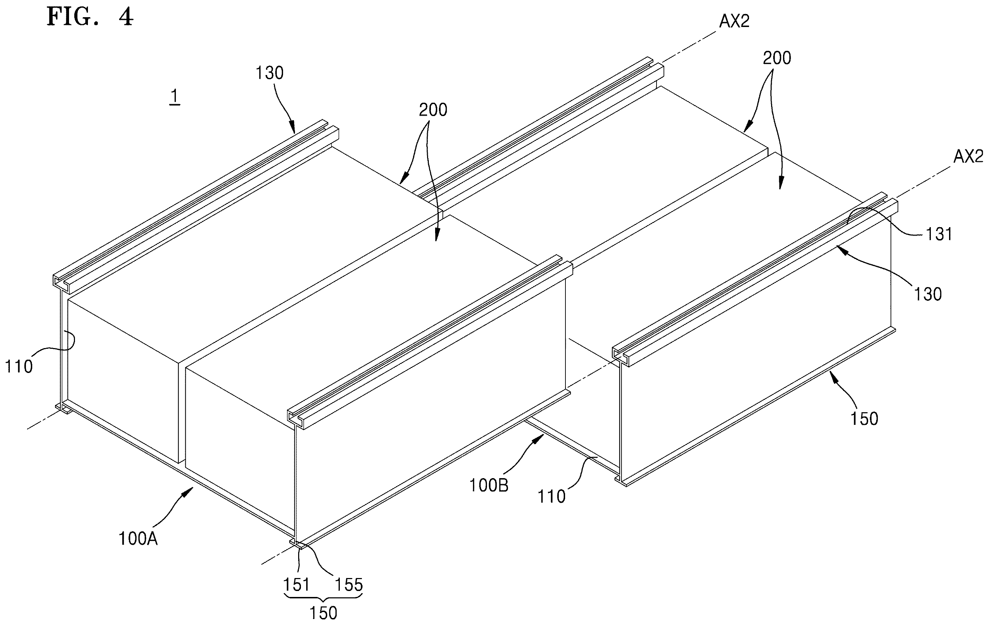

FIG. 1 is a diagram illustrating a battery rack according to an embodiment of the present disclosure. FIG. 2 is a perspective view illustrating a battery module and a battery rack. FIG. 3 is an enlarged view of portion A of FIG. 1. FIG. 4 is a diagram illustrating a state in which a plurality of frame units is coupled to each other.

Referring to FIG. 1, an energy storage system (ESS) 1 may include a battery rack and a battery module 200. The energy storage system 1 may store surplus produced electricity or store energy produced through renewable energy in a battery (or a battery cell, a battery module) and then supply electricity when required, thereby improving power usage efficiency.

The energy storage system 1 may include a battery management system (BMS) for monitoring a state of a battery and controlling and managing power, a power conversion system (PCS) for charging and discharging of a battery, a battery control unit (BCU) for diagnosing the energy storage system 1 by communicating with the battery management system and the power conversion system, and for controlling and monitoring connection and disconnection of a corresponding battery rack, and the like.

Specific configurations of the battery management system, the power conversion system, the battery control unit, and the like are well-known, and thus, detailed descriptions thereof will be omitted.

The present disclosure relates to a battery rack in which the battery module 200 is arranged and accommodated, which will be described in detail below.

Referring to FIG. 1 to FIG. 4, a battery rack according to an embodiment of the present disclosure may include a frame unit 100.

Referring to FIG. 1, the frame unit 100 may have an accommodation portion 110 for accommodating the battery module 200, and a plurality of battery modules 200 may be arranged and accommodated in the accommodation portion 110.

Referring to FIG. 1, a plurality of frame units 100 may be provided, and a plurality of frame units 100A and 100B may be stacked and connected in a preset direction.

For example, the plurality of frame units 100A and 100B may be stacked and connected in a height (or vertical) direction (the up-down direction in FIG. 1).

Referring to FIG. 1, two frame units 100 may be provided and connected to each other, but the present disclosure is not limited thereto, and various modifications are possible, for example, three or more frame units 100 may be connected to each other in the height direction and each may accommodate a plurality of battery modules 200.

The plurality of frame units 100A and 100B may move relative to each other in preset directions and be coupled together. For example, the plurality of frame units 100A and 100B may move relative to each other in a sliding manner along a longitudinal central axis AX1 (shown in FIG. 2) and be coupled together.

Referring to FIG. 2, the longitudinal central axis AX1 of the frame unit 100 may be identical to an insertion direction central axis AX1 of the battery module 200 with respect to the frame unit 100.

In the present specification, two frame units 100 are illustrated for convenience in describing a method for connection (or fastening) between the plurality of frame units 100A and 100B, as will be described in detail below.

Referring to FIG. 2 and FIG. 3, the frame unit 100 may have the hollow accommodation portion 110 formed therein. One or more battery modules 200 may be arranged and accommodated in (or on) the accommodation portion 110. Opposite sides of the accommodation portion 110 in the longitudinal direction (e.g., the AX1 direction) may be open.

Accordingly, the battery module 200 may enter (be inserted into) the accommodation portion 110 from the front or rear of the accommodation portion 110 formed in the frame unit 100, and the battery module 200 may be arranged on the accommodation portion 110.

Referring to FIG. 1 to FIG. 3, a rail groove unit 130 having the shape of a groove may extend in the longitudinal direction (e.g., parallel or substantially parallel to the AX1 direction) at one side (the upper side in FIG. 1) in the frame unit 100. At least one of the front end or the rear end of the rail groove unit 130 in the longitudinal direction may be open.

Referring to FIG. 1, the opposite ends of the rail groove unit 130 formed in the frame unit 100 according to an embodiment of the present disclosure may be open, but various modifications are possible, for example, any one of the front end or the rear end may be open.

Accordingly, a moving protrusion 150 formed in any one (e.g., frame unit 100B) of the plurality of frame units 100A and 100B to be described below may be inserted into another rail groove unit 130 formed in the other frame unit (e.g., frame unit 100A), and the plurality of frame units 100A and 100B may slide relative to each other in the longitudinal direction and constitute a stack structure.

Referring to FIG. 1, a through-hole portion 131 may be formed on one side (the upper side in FIG. 1) of the rail groove unit 130 to extend and penetrate in the longitudinal direction of the rail groove unit 130. The through-hole portion 131 is configured to allow the moving protrusion 150 to pass therethrough.

Referring to FIG. 4, the moving protrusion 150 formed in any one (e.g., frame unit 100A) of the plurality of frame units 100A and 100B may be inserted into the rail groove unit 130 formed in the other frame unit (e.g., frame unit 100B), along a longitudinal central axis AX2.

Here, because the through-hole portion 131 is formed through one side (the upper side in FIG. 1) of the rail groove unit 130, a passing portion 155 of the moving protrusion 150 may extend through the through-hole portion 131 and move along the longitudinal central axis AX2 inside the rail groove unit 130.

Referring to FIG. 3, the width of the through-hole portion 131 may be greater than or equal to the thickness of the passing portion 155 of the moving protrusion 150.

This allows the moving protrusion 150, specifically, the passing portion 155, to be positioned inside the through-hole portion 131, enabling the moving protrusion 150 to move stably on (or in) the rail groove unit 130.

Referring to FIG. 3, the width of the through-hole portion 131 with respect to the longitudinal central axis AX2 of the moving protrusion 150 may be less than the width of the moving protrusion 150 (e.g., a moving body 151 of the moving protrusion 150) with respect to the longitudinal central axis.

This prevents the moving protrusion 150 (e.g., the moving body 151) provided in any one (e.g., frame unit 100A) of the plurality of frame units 100A and 100B that are connected to each other in a sliding manner from passing through the rail groove unit 130 (e.g., the through-hole portion 131) provided in the other frame unit (100B).

Furthermore, the moving protrusion 150 may be prevented from being separated from the rail groove unit 130, and thus, it is possible to prevent (or at least mitigate) the coupling between the plurality of frame units 100A and 100B that are connected (or fastened) while moving relative to each other, from being inadvertently disengaged or released.

Referring to FIG. 1 to FIG. 3, the frame unit 100 may include the moving protrusion 150. The moving protrusion 150 may protrude outward from one side (the lower side in FIG. 1) facing another side (the upper side in FIG. 1) of the rail groove unit 130 on which the moving protrusion 150 is located.

For example, the moving protrusion 150 formed in any one frame unit (e.g., frame unit 100A) of the plurality of frame units 100A and 100B may be inserted into the rail groove unit 130 formed in the other frame unit (e.g., frame unit 100B).

A plurality of moving protrusions 150 may be provided and the moving protrusions 150 may be arranged on opposite sides of the frame unit 100. For example, a pair of moving protrusions 150 may be provided and may be respectively arranged on opposite sides with respect to the longitudinal central axis (e.g., axis AX1) of the frame unit 100.

For example, a pair of moving protrusions 150 provided in any one frame unit (e.g., frame unit 100A) of the plurality of frame units 100A and 100B may be inserted into a pair of rail groove units 130 formed in the other frame unit (e.g., frame unit 100B), respectively.

The moving protrusion 150 provided in the frame unit 100 may be inserted into the rail groove unit 130 along the longitudinal central axis AX2 that forms a preset angle (e.g., a right angle) with respect to the stacking direction of the frame units 100A, 100B.

For example, the moving protrusion 150 in the frame unit 100 may enter the rail groove unit 130 through an opening region formed on at least one of the front side or the rear side with respect to the longitudinal central axis of the rail groove unit 130.

Referring to FIGS. 1 and 3, the moving protrusion 150 may include the moving body 151 and the passing portion 155. The moving body 151 may be arranged inside the rail groove unit 130, may extend in the longitudinal direction of the frame unit 100, and may be configured to move inside the rail groove unit 130 relative to the other frame unit(s) 100.

Referring to FIG. 3, one surface (the lower surface in FIG. 3) of the moving protrusion 150 (e.g., the moving body 151), which faces the outside (the lower side in FIG. 3), may be flat or substantially flat (e.g., planar or substantially planar).

Accordingly, in one or more embodiments, the moving body 151 may be in surface contact with the inner surface of the rail groove unit 130, and the plurality of frame units 100A and 100B may be stably supported by each other in the stacking direction (e.g., vertical direction).

Furthermore, the moving body 151 and the inner surface of the rail groove unit 130 may be in surface contact with each other, and the plurality of frame units 100A and 100B may move stably relative to each other.

In one or more embodiments, the moving protrusion 150 may include a moving roller rotatably connected to the moving body 151. The moving roller may be arranged between the moving body 151 and the inner surface of the rail groove unit 130, and the moving roller may reduce friction between the moving body 151 and the rail groove unit 130.

A plurality of moving rollers may be provided and may be arranged spaced apart from each other with a preset interval (e.g., a regular or irregular interval) therebetween.

Because the moving roller is arranged between the moving body 151 and the rail groove unit 130, the plurality of frame units 100A and 100B may stably move relative to each other and be coupled together.

Referring to FIG. 3, the width of the moving body 151 may be relatively greater than the width of the through-hole portion 131 formed in the rail groove unit 130. Accordingly, it is possible to prevent (or at least mitigate) the plurality of frame units 100A and 100B from being inadvertently separated from each other in the height direction (the up-down direction in FIG. 1) in a state in which the plurality of frame units 100A and 100B are connected to each other in a stacked manner.

Referring to FIGS. 1 and 3, the passing portion 155 may be connected to the moving body 151, and may connect the moving body 151 to the accommodation portion 110. The passing portion 155 may be integral with the accommodation portion 110. The passing portion 155 may extend in the longitudinal direction of the frame unit 100, that is, the relative movement direction between the plurality of frame units 100A and 100B.

Referring to FIG. 3, the passing portion 155 may be connected to the moving body 151 at a preset angle (e.g., a right angle or substantially a right angle).

The thickness of the passing portion 155 may be less than or equal (or substantially equal) to the width of the through-hole portion 131 in the rail groove unit 130.

This allows the moving protrusion 150 (e.g., the passing portion 155) to be positioned inside the through-hole portion 131, thereby enabling the moving protrusion 150 to move stably on (or in) the rail groove unit 130.

Referring to FIG. 3, the outer peripheral surface of the passing portion 155 and the inner peripheral surface of the through-hole portion 131 may be spaced apart from each other by a gap, but the present disclosure is not limited thereto, and in one or more embodiments the inner peripheral surface of the through-hole portion 131 and the outer peripheral surface of the passing portion 155 may be in surface contact with each other.

Accordingly, a plurality of frame units 100 (e.g., 100A and 100B) may stably move relative to each other along the movement central axis AX2 and be fastened (or coupled) together.

Referring to FIGS. 1 to 4, the battery module 200 according to an embodiment of the present disclosure may include one or more battery cells and may be accommodated in a battery rack (e.g., the accommodation portion 110 in the frame unit 100).

A plurality of battery modules 200 may be provided and may be arranged side by side in the accommodation portion 110 formed in the frame unit 100, and the plurality of battery modules 200 may be arranged in a plurality of frame units 100, respectively.

The plurality of battery modules 200 arranged in the plurality of frame units 100 may be connected to each other in series.

In one or more embodiments, the battery control unit may be accommodated in an uppermost portion of the battery rack (e.g., the frame unit 100).

In one or more embodiments, a plurality of battery modules 200 and a plurality of battery control units may be arranged in one frame unit 100. In this embodiment, the plurality of battery control units respectively arranged in the plurality of frame units 100 may be connected to each other through a universal communication line (e.g., a controller area network (CAN)).

The battery rack may be connected to a high-power terminal through fuses and switches. The battery control units may control driving of the fuses and the switches according to (or based on, at least in part) physical quantities measured by the plurality of battery modules 200, to control a voltage of the plurality of battery modules 200 included in the battery rack to be input/output to the outside through the high-power terminal.

A suitable configuration of the battery module 200 is well known, and thus, detailed descriptions thereof will be omitted.

Hereinafter, the operation principle and effects of the energy storage system 1 according to an embodiment of the present disclosure as described above will be described.

Referring to FIG. 1 to FIG. 4, the energy storage system 1 may include a battery rack and battery modules 200.

Referring to FIG. 2, a plurality of battery modules 200 may be arranged in the battery rack (e.g., the accommodation portion 110 in the frame unit 100). The front and rear ends of the accommodation portion 110 may be open, and the plurality of battery modules 200 may be seated in (accommodated in) the accommodation portion 110 an inserted into the accommodated portion 110 along the longitudinal central axis AX1 of the frame unit 100.

Referring to FIGS. 3 and 4, the plurality of frame units 100A and 100B, which are arranged in the height direction (the up-down direction in FIG. 4) and in which the plurality of battery modules 200 are respectively accommodated, may move relative to each other along the longitudinal central axis AX2 to be fastened (or coupled, connected) to each other.

For example, as the moving protrusion 150 formed in any one frame unit (e.g., frame unit 100A) of the plurality of frame units 100A and 100B is inserted into the rail groove unit 130 formed in the other frame unit (100B), the plurality of frame units 100A and 100B connected to and stacked on each other may be connected in a sliding manner in a preset direction.

Furthermore, because the plurality of frame units 100A and 100B are coupled in a sliding manner, a separate process such as welding for coupling the plurality of frame units 100A and 100B may not be required, and by connecting the different frame units 100A and 100B after the battery modules 200 are arranged in the battery rack (e.g., the frame units 100), the installation time may be shortened.

Furthermore, by selecting a method of accommodating the battery modules 200 in any one frame unit 100 and then fastening the frame unit 100 to another frame unit 100, instead of arranging the battery modules 200 on a plurality of frame units 100 installed in advance, the battery modules 200 and the frame units 100 may be integrated.

Hereinafter, a configuration and effects of an energy storage system according to another embodiment of the present disclosure will be described.

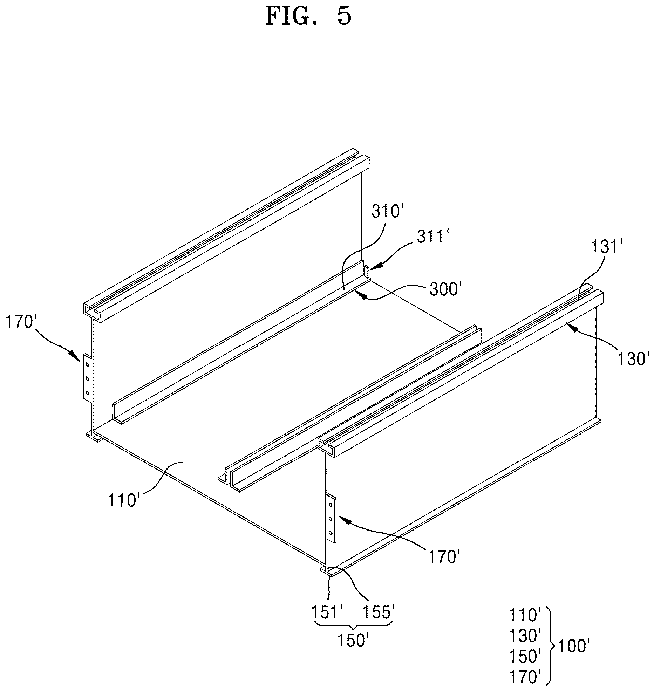

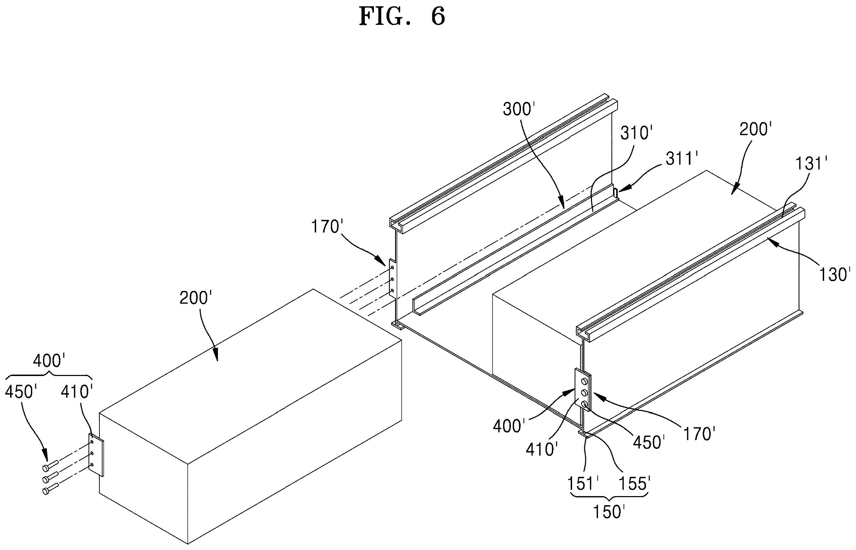

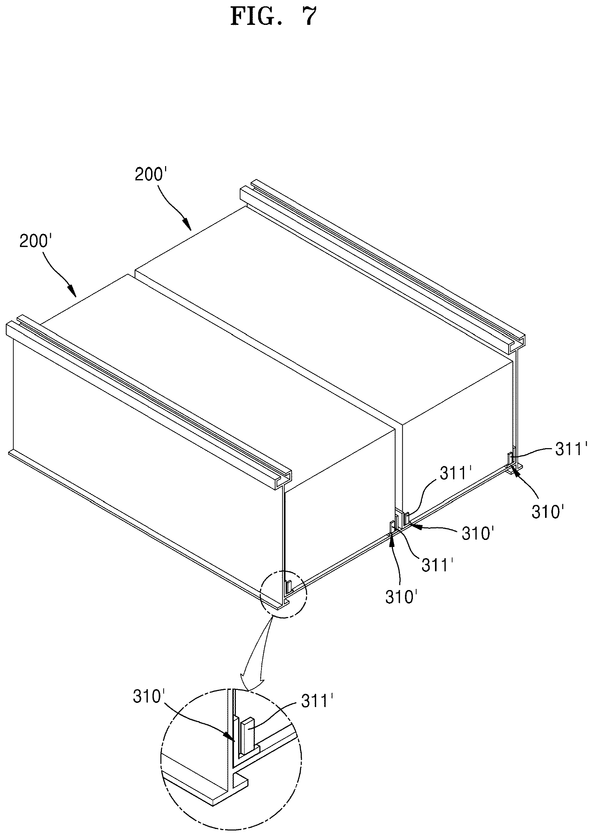

FIG. 5 is a perspective view illustrating a frame unit of a battery rack according to another embodiment of the present disclosure. FIG. 6 is a diagram illustrating a state in which battery modules are arranged in a frame unit, according to another embodiment of the present disclosure. FIG. 7 is a rear perspective view illustrating a state in which battery modules are arranged in a frame unit, according to another embodiment of the present disclosure.

Referring to FIG. 5 to FIG. 7, an energy storage system according to another embodiment of the present disclosure may include a battery rack and battery modules 200'. The battery rack may include a frame unit 100' having an accommodation portion 110' configured to accommodate the battery modules 200', guide units 300', and fixing units 400'.

The energy storage system according to another embodiment of the present disclosure is different from the energy storage system 1 according to an embodiment of the present disclosure in that the battery rack includes the guide units 300' and the fixing units 400', and thus, the following description will focus on the guide units 300' and the fixing units 400'.

Referring to FIG. 5 to FIG. 7, the guide units 300' according to an embodiment of the present disclosure may be fixed in position to the frame unit 100', and the battery modules 200' may be seated on the guide units 300'. The guide units 300' may extend in the longitudinal direction of the frame unit 100', and may include a guide body 310' that provides an insertion path for the battery module 200'.

Referring to FIG. 5, the guide body 310' may be arranged on the accommodation portion 110' in the frame unit 100'.

Referring to FIG. 5, a plurality of guide units 300' may be provided, and a pair of guide units 300' may be respectively arranged on opposite sides of one battery module 200'. In the guide unit 300' (e.g., the guide body 310'), a plurality of surfaces may be connected to each other at a preset angle such that the battery module 200' may be seated.

Referring to FIG. 5, the guide body 310' may be formed in an 'L' shape. The battery module 200' may be seated in an inner region of the guide body 310' in which a plurality of surfaces are formed to have a preset angle (e.g., a substantially 90-degree angle).

Referring to FIGS. 5 and 6, the battery module 200' may be inserted in the longitudinal direction of the guide body 310', and because the guide body 310' provides a seating path (or an insertion path) for the battery module 200', the battery module 200' may be stably accommodated and arranged inside the accommodation portion 110'.

Referring to FIGS. 5 and 6, according to an embodiment of the present disclosure, a stopper portion 311' having a preset angle with the longitudinal central axis of the guide body 310' may protrude from one end of the guide body 310'.

Referring to FIGS. 5 and 7, the stopper portion 311' may form a 90-degree angle (or substantially a 90-degree angle) with the longitudinal central axis of the guide body 310', but the present disclosure is not limited thereto, and various modifications are possible in which the stopper portion 311' protrudes from one end of the guide body 310 toward the inside of the guide body 310'.

Referring to FIGS. 5 to 7, in an embodiment in which one side of the guide body 310' that the battery module 200' enters to be inserted is referred to as a front side of the guide body 310', the stopper portion 311' may be formed to protrude from the rear side of the guide body 310'.

For example, the stopper portion 311' may be located on an insertion path (or a seating path) for the battery module 200' on the guide body 310'.

Accordingly, when the battery module 200' enters the frame unit 100' and is inserted on the guide body 310', the battery module 200' may move only until the battery module 200' contacts the stopper portion 311', and thus, a position of the battery module 200' inside the accommodation portion 110' provided in the frame unit 100' may be set (e.g. the stopper portion 311' limits sliding movement of the battery module 200' beyond a set point).

Referring to FIG. 7, the stopper portions 311' may be formed in a pair of guide bodies 310' to protrude at locations corresponding to the pair of guide bodies 310', respectively.

Accordingly, as the pair of guide bodies 310' arranged inside the accommodation portion 110' provided in the frame unit 100' are arranged on opposite sides of the battery module 200', respectively, an insertion path for the battery module 200' may be stably provided, and the stopper portions 311' may contact and support the battery module 200' at the rear side of the battery module 200' such that the battery module 200' does not deviate from (e.g., extend beyond) the accommodation portion 110' in the frame unit 100'.

In one or more embodiments, an elastic member may be arranged on the battery module 200' and/or on one surface of the stopper portion 311' that faces the front side of the guide body 310'. The elastic member may be formed of (or include) an elastically deformable material.

Accordingly, in a process in which the battery module 200' is inserted into the guide unit 300' arranged in the accommodation portion 110', when the battery module 200' moves toward the stopper portion 311', the elastic member may absorb an impact that may occur between the stopper portion 311' and the battery module 200'.

Referring to FIGS. 5 to 7, the fixing unit 400' according to an embodiment of the present disclosure may connect the battery module 200' to the frame unit 100', and the fixing unit 400' may fix the position of the battery module 200' relative to the frame unit 100'.

The fixing unit 400' may include a fixing body 410' and at least one fastening member 450'. The fixing body 410' may be coupled to the battery module 200', and may come into contact with a contact portion 170' of the frame unit 100'.

Referring to FIG. 5, the frame unit 100' may be provided with the contact portion 170' that may contact the fixing body 410'. The contact portion 170' may have a plate shape, and may be located at the front side of the frame unit 100'.

For example, the contact portion 170' may extend outward in the width direction of the frame unit 100' from the front end of the frame unit 100'.

Accordingly, as the battery module 200' enters the accommodation portion 110' provided in the frame unit 100', the contact portion 170' may contact the fixing body 410' at the front side of the battery module 200' while not hindering an entry path for the battery module 200' to enter the accommodation portion 110' of the frame unit 100'.

When the entry of the battery module 200' into the frame unit 100' is completed (e.g., when he battery module 200' contacts the stopper portion 311'), the fixing body 410' located at the front side of the battery module 200' may contact and overlap the contact portion 170' of the frame unit 100'.

Accordingly, the battery module 200' may be limited from further entering the frame unit 100', and may move and be inserted only up to a position at which the fixing body 410' coupled to the battery module 200' comes into contact with the contact portion 170' of the frame unit 100'.

In other words, at the front side of the frame unit 100', the position of the battery module 200' may be fixed as the contact portion 170' and the fixing unit 400' (e.g., the fixing body 410') contact each other, and at the rear side of the frame unit 100', the guide unit 300' (e.g., the stopper portion 311') of the guide body 310', restricts the movement of the battery module 200' so as to fix the position of the battery module 200' inside the frame unit 100'.

Referring to FIG. 6, the fastening member 450' may penetrate the fixing body 410' to be coupled to the frame unit 100' (e.g., the contact portion 170'). The fastening member 450' may penetrate and fasten the fixing body 410' and the contact portion 170' in a state in which the fixing body 410' coupled to the battery module 200' is in contact with the contact portion 170' at the front side of the frame unit 100'.

A plurality of fastening members 450' may be provided, and a plurality of fastening hole portions may be provided in the fixing body 410' and the contact portion 170' to overlap the plurality of fastening members 450' to allow the plurality of fastening members 450' to pass therethrough.

Referring to FIG. 6, the fastening member(s) 450' may fasten the fixing body 410' to the contact portion 170' by using a bolt(s), but the present disclosure is not limited thereto, and various modifications are possible, such as fastening by a magnet method or mechanism, in which the fastening member 450' fastens the contact portion 170' of the frame unit 100' to the fixing body 410' coupled to the battery module 200'.

In relation to the specific configuration of the battery rack, the energy storage system according to another embodiment of the present disclosure is the same as the energy storage system 1 according to an embodiment of the present disclosure in the configuration of the accommodation portion 110', a rail groove unit 130', the moving protrusion 150', and the battery module 200' provided in the frame unit 100' except for the configuration of the contact portion 170', the guide unit 300', and the fixing unit 400' provided in the frame unit 100', and thus, redundant detailed descriptions thereof will be omitted.

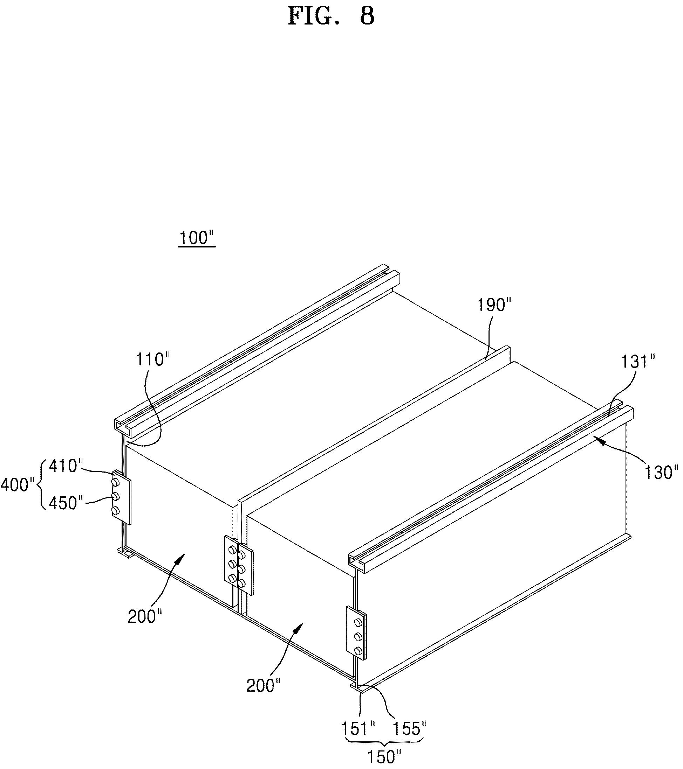

Hereinafter, a configuration, an operating principle, and effects of an energy storage system according to another embodiment of the present disclosure will be described. FIG. 8 is a perspective view illustrating a battery rack according to another embodiment of the present disclosure.

Referring to FIG. 8, the energy storage system according to another embodiment of the present disclosure may include a battery rack and battery modules 200". The battery rack may include a frame unit 100".

The energy storage system according to another embodiment of the present disclosure is different in that the frame unit 100" further includes a partition wall 190" that divides an accommodation portion 110" in which the battery module 200" is accommodated, into a plurality of regions, and thus, the following description will focus on the partition wall 190".

Referring to FIG. 8, the partition wall 190" may be connected to the accommodation portion 110" of the frame unit 100", and the partition wall 190" may divide the accommodation portion 110" into a plurality of regions. For example, the partition wall 190" may be located at a central portion (or substantially a central portion) in the width direction of the frame unit 100".

The partition wall 190" may extend in the longitudinal direction of the frame unit 100", and the partition wall 190" may be connected to the accommodation portion 110" at a preset angle (e.g., a right angle or substantially a right angle) with respect to the bottom surface of the accommodation portion 110".

The partition wall 190" may be configured as a separate object or component from the accommodation portion 110" and may be detachable from the accommodation portion 110". However, the present disclosure is not limited thereto, and various modifications are possible, for example, the partition wall 190" may be integral with the accommodation portion 110".

Referring to FIG. 8, because the partition wall 190" divides an inner region of the accommodation portion 110", battery modules 200" may be respectively arranged in the plurality of regions formed by the partition wall 190" (e.g., the battery modules 200" may be on opposite sides of the partition wall 190").

In one or more embodiments, a contact portion may be provided in the frame unit 100" that is configured to contact a fixing body 410". The contact portion may be formed in a plate shape and it may be located at the front side of the frame unit 100".

Referring to FIG. 8, the contact portion may extend outward in the width direction of the frame unit 100" from the front end of the frame unit 100".

Referring to FIG. 8, a plurality of contact portions may be provided and they may be located on opposite sides of the frame unit 100" and at the partition wall 190".

Accordingly, when a plurality of battery modules 200" enter the plurality of regions in the accommodation portion 110" divided by the partition wall 190", the fixing bodies 410" coupled to opposite sides of the battery module 200" contact the contact portions, and the positions of the battery modules 200" may be fixed by fastening members 450".

Referring to FIG. 8, when the entry of the battery module 200" into the frame unit 100" is completed, the fixing bodies 410" located on opposite front sides of the battery module 200" may contact and overlap the plurality of contact portions respectively in the frame unit 100" (e.g., at the front end of the accommodation portion 110" of the frame unit 100" and an end of the partition wall 190')'.

Accordingly, the battery module 200" may be limited from further entering the frame unit 100", and the battery module 200" may move and be inserted only up to a position at which the fixing body 410" coupled to the battery module 200" contacts a contact portion of the frame unit 100".

In other words, at the front side of the frame unit 100", the position of the battery module 200" may be fixed as a contact portion 170" and a fixing unit 400", (e.g., the fixing body 410"), come into contact with each other, and at the rear side of the frame unit 100", a guide unit (e.g., a stopper portion of a guide body), restricts the movement of the battery module 200" so as to fix the position of the battery module 200" inside the accommodation portion 110" of frame unit 100".

Referring to FIG. 8, the fastening member 450" may penetrate the fixing body 410" to be coupled to the frame unit 100" (e.g., the contact portion,) and in a state in which the fixing body 410" coupled to the battery module 200" is in contact with the contact portion of the frame unit 100" (e.g., the front end of the accommodation portion 110" and an end of the partition wall 190"), the fastening member 450" may penetrate and fasten the fixing body 410" and the contact portion to each other.

A plurality of fastening members 450" may be provided, and a plurality of fastening hole portions may be provided in the fixing body 410" and the contact portion to overlap the plurality of fastening members 450" to allow the plurality of fastening members 450" to pass therethrough.

Referring to FIG. 8, the fastening member 450" may fasten the fixing body 410" to the contact portion by using a bolt, but the present disclosure is not limited thereto, and various modifications are possible, such as fastening by a magnet method or mechanism, in which the fastening member 450" fastens the contact portion provided in the frame unit 100" and the fixing body 410" coupled to the battery module 200" to each other.

In relation to the specific configuration of the battery rack, the energy storage system according to another embodiment of the present disclosure is the same as the energy storage system according to another embodiment of the present disclosure in the configuration and effects of the guide unit 300', the fixing unit 400', and the battery module 200', which correspond to the specific configuration of the battery rack of the energy storage system according to the other embodiment of the present disclosure, except for the configuration of the partition wall 190" that divides the accommodation portion 110" provided in the frame unit 100" into a plurality of regions, the configuration in which the contact portion that may come into contact with the fixing body 410" is located on the partition wall 190", and the configuration in which the plurality of fixing bodies 410" are coupled to opposite sides of the battery module 200", and thus, redundant detailed descriptions thereof will be omitted.

In the energy storage system according to embodiments of the present disclosure, a rail groove unit may extend along one side of a battery rack (e.g., a frame unit), and a moving protrusion may be formed outward on the opposite side, thereby allowing the moving protrusion provided in any one of a plurality of frame units to move relative to a rail groove unit in another frame unit, such that the plurality of frame units accommodating battery modules and arranged in a stacking manner may be easily coupled to each other.

Although the present disclosure has been described above by means of limited embodiments and drawings, the present disclosure is not limited thereto, and various modifications and variations are possible by those of skill in the art without departing from the scope of the present disclosure and equivalents as defined by the appended claims.

According to embodiments, a rail groove unit extends along one side of a frame unit, and a moving protrusion is formed outward on the opposite side, allowing the moving protrusion on any one of a plurality of frame units to move relative to a rail groove unit formed in another frame unit, such that the plurality of frame units accommodating battery modules and arranged in a stacking manner may be easily fastened.

However, the effects of the present disclosure are not limited to the foregoing, and other unmentioned effects would be clearly understood by those of skill in the art from the following description.

## Claims

1. A battery rack comprising a frame unit having an accommodation portion configured to accommodate a battery module,
wherein the frame unit comprises:
a rail groove unit on one side of the frame unit, the rail groove unit extending in a longitudinal direction and having a shape of a groove; and
a moving protrusion protruding outward from another side of the frame unit opposite to the one side on which the rail groove unit is located.

2. The battery rack of claim 1, wherein the frame unit comprises a plurality of frame units, and
wherein the plurality of frame units are stackable and connectable to each other in a preset direction.

3. The battery rack of claim 2, wherein the plurality of frame units is couplable to each other while moving relative to each other in a preset direction, and, optionally, wherein said preset direction is the longitudinal direction.

4. The battery rack of any preceding claim, wherein opposite sides of the rail groove unit in the longitudinal direction are open.

5. The battery rack of any preceding claim, wherein a through-hole portion is on one side of the rail groove unit to allow the moving protrusion to pass therethrough, and the through-hole extends in a longitudinal direction of the rail groove unit and penetrates the rail groove unit.

6. The battery rack of any preceding claim, wherein one surface of the moving protrusion is substantially flat.

7. The battery rack of any preceding claim, further comprising a guide unit fixed in position to the frame unit, the guide unit being configured to seat the battery module thereon.

8. The battery rack of any preceding claim, wherein the guide unit extends in the longitudinal direction of the frame unit and provides an insertion path for the battery module.

9. The battery rack of any preceding claim, wherein the guide unit includes two or more guide units that are respectively arranged on opposite sides of the battery module.

10. The battery rack of any preceding claim, further comprising a fixing unit that is configured to connect the battery module to the frame unit and to fix a position of the battery module.

11. The battery rack of claim 10, wherein the fixing unit comprises:
a fixing body coupled to the battery module; and
a fastening member configured to penetrate the fixing body and to be coupled to the frame unit.

12. The battery rack of claim 10 or claim 11, wherein the fixing unit comprises a plurality of fixing units arranged on opposite sides of the battery module with respect to a central portion of the battery module.

13. An energy storage system comprising:
a battery module comprising one or more battery cells; and
a battery rack according to any preceding claim.
